# EUROPEAN PATENT APPLICATION

(11) **EP 2 770 185 A1**
(43) Date of publication of application: **27.08.2014**
(21) Application number: 11874173.5
(22) Date of filing: 21.10.2011
(51) Int. Cl.: F02D 23/02, F02B 37/22

(54) **CONTROL DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: IBUKI, Taku, Toyota-shi, Aichi-ken, 471-8571 (JP)
(74) Representative: TBK
(86) International application number: PCT/JP2011/074282
(87) International publication number: WO 2013/057829

(57) **Abstract**

A control device of the invention is applied to an engine including a supercharger and a mechanism to allow area of an opening of a passage space to be variable, which space is to pass through exhaust gas guided to the supercharger. The control device changes the above area and a fuel supply amount to a combustion chamber based on a first degree of change in torque and a second degree of change in torque. The first degree is due to a change in an intake air amount to the combustion chamber to be occurred along with the change in the above area, and the second degree is due to a change in pressure of the exhaust gas to be occurred along with the change in the above area.

## Description

### TECHNICAL FIELD

This invention relates to a control device that includes a supercharger.

### BACKGROUND ART

Internal combustion engines with supercharger (so-called variable geometry Supercharger, VGT) are conventionally designed, and such supercharger includes a turbine to which exhaust gas is guided and a compressor with which air is compressed when being coordinated with the turbine to enable an adjustment of supercharging characteristic by controlling an area of an opening of a space through which exhaust gas is guided to the turbine.

One of conventional control device applied to this kind of internal combustion engine (hereinafter referred to as "conventional device") is designed to control the pressure of air (supercharging pressure) guided to combustion chambers of the engine by controlling the pass space of the space depending on the situation such as operating condition of the engine (for example, see the patent literature 1). The space through which exhaust gas is guided to the turbine is hereinafter referred to as "passage space".

### CITATION LIST

Patent Literature 1 : JP 2007-192155 A

### SUMMARY OF INVENTION

The following is a detailed description of a relationship between the area of the opening of the passage space and the supercharging characteristic of the supercharger regarding the engine having the above supercharger.

First, when the area of the opening of the passage space changes, the rotational speed of the turbine changes due to the change in the flow rate of exhaust gas guided to the turbine, and then the rotational speed of the compressor changes. As a result, the supercharging pressure changes as described above. In particular, the supercharging pressure generally increases with decreasing amount of the area of the opening of the passage space, and the supercharging pressure generally decreases with increasing amount of the area of the opening of the passage space.

Furthermore, the amount of air guided to the combustion chamber increases with increasing amount of the supercharging pressure, and then the amount of fuel to be combusted in the combustion chamber increases. The amount of work through a combustion cycle of the engine then increases with increasing amount of fuel to be combusted. That is, the amount of fuel to be combusted (i.e., the amount of work generated by the engine) increases with decreasing amount of the area of the opening of the passage space, and the amount of fuel to be combusted (i.e., the amount of work generated by the engine) decreases with increasing amount of the area of the opening of the passage space.

On the other hand, when the area of the opening of the passage space changes, the pressure of exhaust gas (exhaust pressure) in an area between the combustion chamber and the supercharger (for example, exhaust manifold) changes. In particular, the exhaust pressure generally increases with decreasing amount of the area of the opening of the passage space, and the exhaust pressure generally decreases with increasing amount of the passage space. Furthermore, the loss of the amount of work generated by the engine (the negative amount of work in the exhaust stroke and the intake stroke: So-called pumping loss) increases with increasing amount of the exhaust pressure. That is, the pumping loss increases with decreasing amount of the area of the opening of the passage space, and the pumping loss decreases with increasing amount of the area of the opening of the passage space.

As described above, the both of the supercharging pressure and the exhaust pressure change when the area of the opening of the passage space changes. Thus, the both of the amount of work generated by the engine (the positive amount of work) and the pumping loss (the negative amount of work) change, when the area of the opening of the passage space changes. In particular, when the area of the opening of the passage space decreases, the amount of work generated by the engine (the positive amount of work) increases, and the pumping loss (the negative amount of work) also increases. Instead, when the area of the opening of the passage space increases, the amount of work generated by the engine (the positive amount of work) decreases, and the pumping loss (the negative amount of work) also decreases. That is, there is a trade-off relationship between the amount of work generated by the engine and the pumping loss regarding the area of the opening of the passage space.

The above is the descriptions regarding the relationship between the area of the opening of the passage space and the supercharging characteristic of the supercharger.

The conventional device is designed to control the area of the opening of the passage space in consideration of the amount of the pumping loss when controlling the supercharging pressure. In particular, the conventional device controls the area of the opening of the passage space to decrease the pumping loss instead to match the supercharging pressure with a predetermined target supercharging pressure, when the amount of the pumping loss is approaching a predetermined upper limit. For example, the conventional device controls the area of the opening of the passage space so that the supercharging pressure is smaller than the target supercharging pressure (that is, so that the area of the opening of the passage space is larger than the area of the opening where the supercharging pressure matches to the target supercharging pressure) to decrease the pumping loss.

However, as described above, the amount of air guided to the combustion chamber decreases and then the amount of fuel to be combusted in the combustion chamber decreases, when the supercharging pressure decreases. Nevertheless, the conventional device sets the amount of fuel under the assumption that the supercharging pressure matches to the target supercharging pressure (in other words, without considering the case that the amount of fuel to be combusted would decrease). As a result, a part of fuel supplied into the combustion chamber may not be combusted when the conventional device controls the area of the opening of the passage space to decrease the pumping loss in priority to the other parameters. In other words, a part of fuel is expended without being converted to the work of the engine.

Torque output from an engine is a value obtained by representing an amount of work of the engine as a moment around an output axis. Thus, when a part of fuel is expended without being converted to the work of the engine, the part of fuel does not contribute to the torque of the engine. It is preferable to prevent the consumption of fuel that does not contribute to the torque of the engine as far as possible, in view of improving fuel efficiency of the engine.

In view of the above technical problems, an object of the present invention is to provide a control device that can improve fuel efficiency of the engine as far as possible and control the torque of the engine as well.

The control device of the present invention, for solving the above technical problem, is applied to an internal combustion engine comprising a supercharger. The supercharger has a mechanism to allow area of an opening of a "passage space" to be variable, which passage space is a space to pass through exhaust gas guided to the supercharger.

The "passage space" may be a space through which exhaust gas passes before entering into the supercharger, and is not specifically limited in the form and the location thereof. Specific examples of the passage space are described below.

The control device of the present invention comprises a configuration to change the "area of the opening of the passage space" and a "fuel supply amount" based on a "first degree of change in torque" and a "second degree of change in torque". The fuel supply amount is an amount of fuel to be supplied into a combustion chamber. The first degree is a degree of change in torque of the engine due to a change in an intake air amount to be occurred along with the change in the area of the opening of the passage space. The second degree is a degree of change in torque of the engine due to a change in pressure of the exhaust gas to be occurred along with the change in the area of the opening of the passage space. The intake air amount is an amount of air guided to the combustion chamber of the engine.

As described above, when the area of the opening of the passage space is changed, the amount of work of the engine changes due to the change in the amount of air guided to the combustion chamber (and the amount of fuel to be combusted), and the pumping loss of the engine changes due to the change in the exhaust pressure. The former corresponds to the first degree of change in torque, and the latter corresponds to the second degree of change in torque.

As a result, the consumption of fuel that does not contribute to torque of the engine can be prevented and the torque of the engine can be controlled as well by controlling the "area of the opening of the passage space" and the "fuel supply amount" based on the first degree of change in torque and the second degree of change in torque. The control device thus can improve fuel efficiency of the engine as far as possible and control the torque of the engine as well.

The "first degree of change in torque" and the "second degree of change in torque" may be parameters that are enable to represent a degree of change in torque of the engine, and are not specifically limited. For example, as the first degree of change in torque, the ratio of the amount of torque after changing the area of the opening of the passage space to the amount of torque before changing the area of the opening of the passage space (that is, the change rate of torque) may be employed. Furthermore, for example, as the first degree of change in torque, the difference between the amounts of torque after changing the area of the opening of the passage space to the amount of torque before changing the area of the opening of the passage space (that is, the change amount of torque) may be employed. Furthermore, for example, as the second degree of change in torque, the change rate of torque or the change amount of torque may be employed in the same manner.

Methods to measure the first degree of change in torque and the second degree of change in torque and methods to change the area of the opening of the passage space and the fuel supply amount based on the degrees of change in torque may be any methods employed in consideration of the configuration of the engine, required fuel efficiency, and required response speed of torque, and are not specifically limited.

For example, as a specific embodiment, the control device of the present invention may comprise a configuration, when a target value of the degree of change in torque of the engine is referred to as a "target degree of change in torque",
(1) to estimate a relationship between a "total degree of change in torque" and a degree of change in the area of the opening of the passage space, which total degree is a sum of the first degree and the second degree;
(2-1) to determine, as a "target degree of change in the area of the opening", a degree of change in the area of the opening of the passage space within a range to allow an absolute value of the total degree of change in torque to be equal to or larger than an absolute value of the target degree of change in torque, when a maximum value of the absolute value of the total degree of change in torque is equal to or larger than the absolute value of the target degree of change in torque, or (2-2) to determine, as the "target degree of change in the area of the opening", a degree of change in the area of the opening of the passage space at a point to allow the absolute value of the total degree of change in torque to be equal to the maximum value, when the maximum value of the absolute value of the total degree is smaller than the absolute value of the target degree of change in torque, which target degree of change in the area of the opening is a target value of the degree of change in the area of the opening of the passage space;
(3) to estimate the intake air amount when the area of the opening of the passage space is changed by the target degree of change in the area of the opening, and to determine a "target fuel supply amount" depending on the estimated intake air amount, which target fuel supply amount is a target value of the fuel supply amount; and
(4) to change the area of the opening of the passage space and the fuel supply amount so as to match the degree of change in the area of the opening of the passage space with the target degree of change in the area of the opening and so as to match the fuel supply amount with the target fuel supply amount.

The following is reasons that the control device of the above embodiment employs the above control.

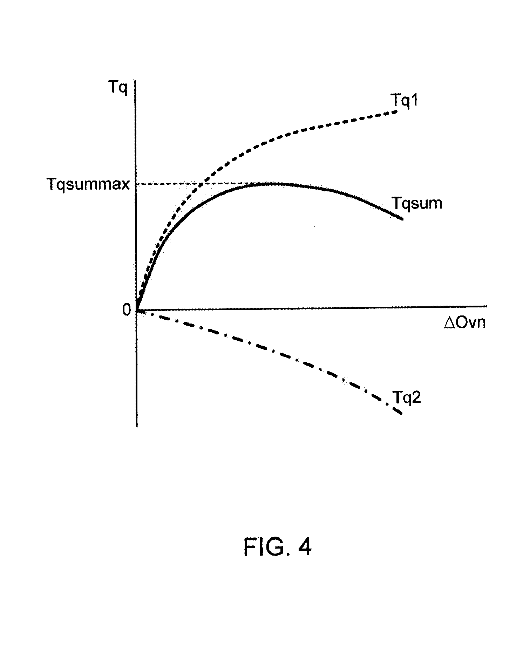

As described above, the first degree of change in torque, which degree is relating to the amount of work generated by the engine (the positive amount of work), and the second degree of change in torque, which degree is relating to the pumping loss of the engine (the negative amount of work), when the area of the opening of the passage space is changed. For example, in the case that the area of the opening of the passage space decreases, the first degree of change in torque increases in a positive direction, and the second degree of change in torque increases in a negative direction (for example, see FIG. 4 described below). In this case, the sum of the first degree of change in torque and the second degree of change in torque (the total degree of change in torque) generally increases in a positive direction when the area of the opening of the passage space is at least within a predetermined range (in other words, the total degree of change in torque does not necessarily increase in a negative direction (decreases) in spite that area of the opening of the passage space decreases). For example, in some cases, the total degree of change in torque has a profile that is convex in a positive direction when the area of the opening of the passage space decreases (see FIG. 4).

The control device of the above embodiment changes the area of the opening of the passage space in consideration of the profile of the total degree of change in torque. In particular, the control device of the above embodiment estimates the "relationship (profile) between the total degree of change in torque and the degree of change in the area of the opening of the passage space." Furthermore, the control device of the above embodiment determines, based on the estimated relationship (profile), the degree of the area of the opening of the passage space where the total degree of change in torque is equal to or larger than the target degree of change in torque (that is, the absolute value of the total degree of change in torque is equal to or larger than the absolute value of the target degree of change in torque), or the degree of change in torque where the total degree of change in torque is as close as possible to the target degree of change in torque (that is, the absolute value of the total degree of change in torque is the maximum value). That is, the control device of the above embodiment determines the degree of change in the area of the opening of the passage space (the target degree of change in the area of the opening) so as to achieve the change in torque by the target degree of change in torque as far as possible.

Furthermore, the control device of the above embodiment determines an appropriate fuel supply amount in view of enhancing the fuel efficiency of the engine (that is, the target fuel supply amount) based on the intake air amount when the area of the opening of the passage space is changed by the target degree of change in the area of the opening.

As described above, the control device of the above embodiment is configured to (4) change the area of the opening of the passage space so that (2-1) the total degree of change in torque is equal to or larger than the target degree of change in torque or (2-2) the total degree of change in torque is as close as possible to the target degree of change in torque. Furthermore, the control device is configured to (3) change the fuel supply amount so as to be an amount depending on the intake air amount when the area of the opening of the passage space is changed as above. Thereby, the control device can achieve the change in torque by the target degree of change in torque as far as possible and set the fuel supply amount to an amount depending on the intake air amount.

The above is reasons that the control device of the above embodiment employs the above control.

The "amount depending on the intake air amount" may be an amount determined in consideration of the estimated intake air amount, and is not specifically limited. For example, as the amount depending on the intake air amount, an amount may be employed so as not to be larger than the amount of fuel enabled to be combusted by using air of the intake air amount. Furthermore, for example, as the amount depending on the intake air amount, an amount of fuel may be employed so as to be combusted by using air of the intake air amount without excess or deficiency (that is, an amount where the ratio of the intake air amount and the fuel supply amount is the theoretical air fuel ratio).

Thereby, the control device can control the torque of the engine while preventing the consumption of fuel that does not contribute to the torque of the engine. Consequently, the control device can enhance the fuel efficiency of the engine as far as possible and control the torque of the engine as well.

The supercharger installed in the engine to which the control device of the present invention is applied may have a configuration to enable the compression of air guided to the combustion chamber by using energy of exhaust gas, and is not specifically limited.

For example, as an embodiment, the supercharger may comprise a turbine installed on an exhaust passage of the engine and to be driven by using exhaust gas guided to the turbine through the passage space, a compressor installed on an intake passage of the engine and to be driven to compress air guided to the combustion chamber upon the turbine being driven, and a member to change the area of the opening of the passage space.

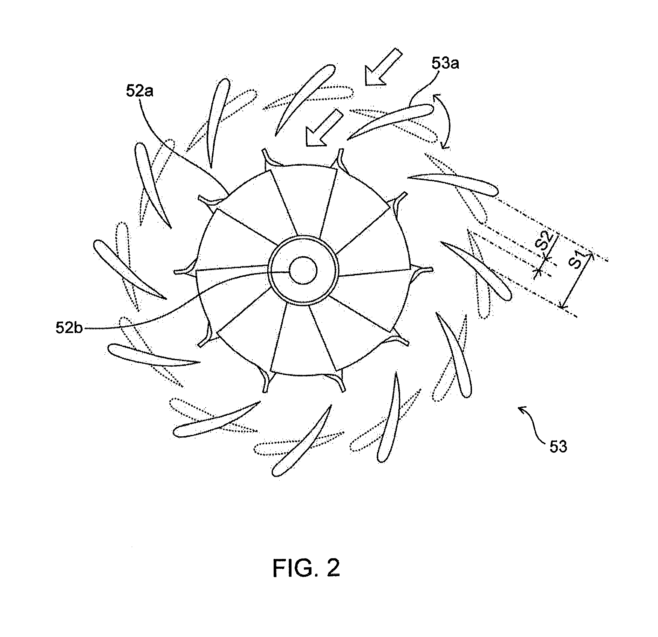

The "member" may be a member to enable the change in the area of the opening of the passage space, and is not specifically limited. For example, as the member to change the area of the opening of the passage space, a member may be employed so as to have a plurality of blade-shaped members (vanes) arranged to surround the turbine, and a chassis to guide exhaust gas to the blade-shaped members (so-called variable nozzle) (see FIG. 2 described below). Regarding the variable nozzle, an area between one blade-shaped member and another blade-shaped member adjacent to the one blade-shaped member corresponds to the "passage space". Furthermore, regarding the variable nozzle, the area of the opening of the passage space may be changed by rotating the blade-shaped members depending on predetermined instructions.

### BRIEF DESCRIPTION OF DRAWINGS

FIG. 1 is a schematic diagram of an internal combustion engine to which a control device according to first embodiment of the invention is applied.
FIG. 2 is a schematic diagram of a variable nozzle mechanism employed in the engine illustrated in FIG. 1.
FIG. 3 is a flowchart illustrating a routine executed by a CPU of a control device according to the first embodiment of the invention.
FIG. 4 is a schematic diagram illustrating a relationship between the degree of change in the area of the opening of the passage space, first degree of change in torque, second degree of change in torque, and total rate of change in torque.
FIG. 5 is a schematic diagram illustrating a relationship between total rate of change in torque and target rate of change in torque.
FIG. 6 is a schematic diagram illustrating a relationship between total rate of change in torque and target rate of change in torque.
FIG. 7 is a flowchart illustrating a routine executed by a CPU of a control device according to second embodiment of the invention.
FIG. 8 is a flowchart illustrating a routine executed by a CPU of a control device according to second embodiment of the invention.

### DESCRIPTION OF EMBODIMENTS

Hereinafter, embodiments of the control device of the present invention (the first embodiment to the second embodiment) will be described by referring to the drawings.

### (First Embodiment)

### <Outline of Device>

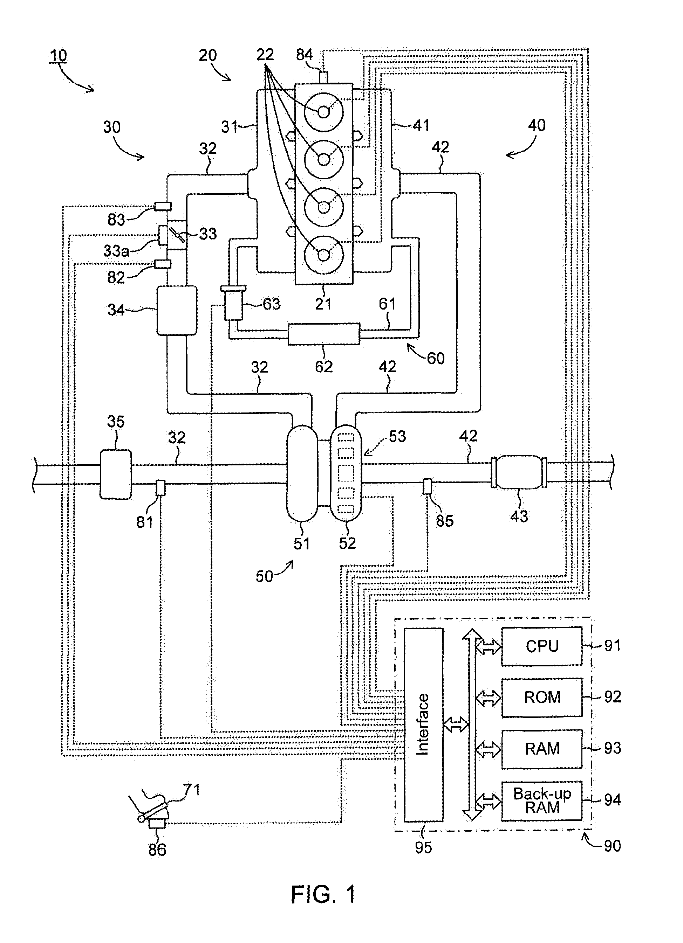

FIG. 1 illustrates a schematic configuration of a system in which the control device according to the first embodiment of the present invention (hereinafter referred to as "first device") is applied to an internal combustion engine 10. The internal combustion engine 10 is a four-cycle diesel engine. The internal combustion engine 10 is hereinafter simply referred to as "engine10" for the sake of convenience.

As illustrated in FIG. 1, the engine 10 includes a main body 20 including a fuel injection system, an intake system 30 to guide air into the main body 20, an exhaust system 40 to discharge gas from the main body 20 to outside of the engine 10, a supercharger 50 driven by using energy of exhaust gas to compress air guided to the main body 20, and an EGR unit 60 to recirculate exhaust gas from the exhaust system 40 to the intake system 30.

The main body 20 includes a cylinder head 21 through which the intake system 30 and the exhaust system 40 are connected. The cylinder head 21 includes a plurality of fuel injection devices 22 (for example, solenoid-type injectors. Hereinafter referred to as "injector(s) 22"), each of which is mounted on upside of each cylinder so as to correspond to the each cylinder. Each injector 22 is connected to a fuel tank (not shown) and is controlled to inject fuel into each combustion chamber depending on instruction signals from an electronic control unit 90.

The intake system 30 includes intake ports (not shown) formed on the cylinder head 21, an intake manifold 31 connected to each cylinder via the intake ports, an intake pipe 32 connected to the collecting area located upstream of the intake manifold 31, a throttle valve (intake throttling valve) 33 capable of changing the area of the opening (the opening cross-sectional area) of the intake pipe 32, and a throttle valve actuator 33a rotatory driving the throttle valve 33 depending on the instruction signals from the electronic control unit 90, an intercooler 34 installed upstream of the throttle valve 33 on the intake pipe 32, and an air cleaner 35 installed upstream of the supercharger 50 located upstream of the intercooler 34 (that is, at the one end of the intake pipe 32). The intake manifold 31 and the intake pipe 32 constitute the intake passage.

The exhaust system 40 includes exhaust ports (not shown) formed on the cylinder head 21, the exhaust manifold 41 connected to each cylinder via the exhaust ports, an exhaust pipe 42 connected to the collecting area located downstream of the exhaust manifold 41, and a catalyst 43 (for example, DPNR) installed downstream of the supercharger 50 located on the exhaust pipe 42 to purify the exhaust gas. The exhaust manifold 41 and the exhaust pipe 42 constitute the exhaust passage.

The supercharger 50 includes a compressor 51, a turbine 52 and a variable nozzle mechanism 53. The compressor 51 is located on the intake passage (the intake pipe 32). The turbine 52 is located on the exhaust passage (the exhaust pipe 42). Compressor blades (not shown) of the compressor 51 and turbine blades 52a (see FIG. 2) of the turbine 52 are connected by a rotor shaft 52a (see FIG. 2) to allow coaxial rotation of them. Thereby, the compressor blades rotate when being coordinated with the turbine blades 52a that is rotated by exhaust gas guided to the turbine 52. As a result, air guided to the compressor 51 (in other words, air guided to the combustion chamber) is compressed. The variable nozzle mechanism 53 is installed around the turbine blades 52a. The variable nozzle mechanism 53 is configured to change area of the opening of space through which the exhaust gas is guided to the turbine 52 (hereinafter referred to as "passage space") depending on instruction signals from the electronic control unit 90. As described above, the engine 10 is an engine configured to allow the change in the area of the opening of the space (passage space) through which the exhaust gas is guided to the supercharger 50.

The configuration of the variable nozzle mechanism 53 will be described by referring to FIG. 2. The variable nozzle mechanism 53 includes a plurality of blade-shaped members (vanes) 53a, and a cylinder-shaped member (not shown) to guide exhaust gas to the vanes 53a. A plurality of the vanes 53a are arranged to surround the turbine blades 52a. This configuration allows exhaust gas to be guided to the turbine blades 52a through area between one vane 53a and another vane adjacent to the one vane 53a, as the arrows in the figure. The area between one vane 53a and another vane is the passage space.

Each vane 53a is configured to rotate around a predetermined rotational axis within a range from the position shown using solid line to the position shown using broken line in the figure, depending on instruction signals from the electronic control unit 90. All vanes 53a are configured to rotate in an interlocked manner. Thus, when the vanes 53a rotate, the area of the opening of the passage space changes within a range from area S1 (the area of the opening of the passage space when the vanes 53a are located at the position shown using solid line) to area S2 (the area of the opening of the passage space when the vanes 53a are located at the position shown using broken line).

As described above, the variable nozzle mechanism 53 changes the area of the opening of the passage space depending on the instruction signals. When the area of the opening of the passage space changes, a parameter such as a flow rate of exhaust gas guided to the turbine blades 52a changes, and the amount of energy of exhaust gas guided to the turbine blades 52a changes. Then, a rotation number of the turbine blades 52a per unit time changes. As a result, the pressure of air guided to the combustion chamber (supercharging pressure) changes, and the amount of air guided to the combustion chamber (hereinafter referred to as "intake air amount") changes.

The EGR unit 60 includes, by referring to FIG. 1 again, an exhaust recirculation pipe 61 constituting a passage (EGR passage) to recirculate exhaust gas from the exhaust manifold 41 to the intake manifold 31, a unit to cool the EGR gas (EGR gas cooler) 62 installed on the exhaust recirculation pipe 61, and an EGR control valve 63 installed on the exhaust recirculation pipe 61. The EGR control valve 63 controls the amount of the recirculated gas depending on instruction signals of the electronic control unit 90.

The acceleration pedal 71 is provided outside of the engine 10. The acceleration pedal 71 is controlled by operators of the engine 10 to input instructions such as a request to increase speed.

Regarding the sensors 81-86, the first device includes an air flow meter 81, an intake temperature sensor 82, a supercharging pressure sensor 83, a crank position sensor 84, a particle matter sensor 85, and an acceleration pedal position sensor (PM sensor) 86.

The air flow meter 81 is installed on the intake passage (the intake pipe 32). The air flow meter 81 outputs signals corresponding to the amount of intake air (i.e., the mass of intake air to the engine 10), which amount is the mass flow rate of intake air flowed in the intake pipe 32. The intake air amount Mc is obtained based on these signals.

The intake temperature sensor 82 is installed on the intake passage (the intake pipe 32). The intake temperature sensor 82 outputs signals corresponding to an intake temperature, which is the temperature of intake air flowed in the intake pipe 32. The intake temperature is obtained based on these signals.

The supercharging pressure sensor 83 is installed upstream of the throttle valve 33 on the intake pipe 32. The supercharging pressure sensor 83 outputs signals representing a pressure of air in the intake pipe 32 (that is, a pressure of air guided to the combustion chamber of the engine 10. In other words, the supercharging pressure generated by the supercharger 50). The supercharging pressure Pim is obtained based on these signals.

The crank position sensor 84 is installed near the crankshaft (not shown). The crank position sensor 84 outputs signals that has a narrow pulse with every 10 degrees rotation of the crankshaft and a wide pulse with every 360 degrees rotation of the crankshaft. The number of rotations of the crankshaft per unit time (hereinafter referred to as "engine rotational speed NE") is obtained based on these signals.

The PM sensor 86 is installed upstream of the catalyst 43 on the intake pipe 32. The PM sensor 86 outputs signals representing the amount of particle matter (PM) included in exhaust gas guided to the catalyst 43.

The acceleration pedal position sensor 86 is installed on the acceleration pedal AP, which is controlled by an operator of the engine 10. The acceleration pedal position sensor 86 outputs signals depending on the position of the acceleration pedal AP. The acceleration pedal position Accp is obtained based on the signals.

The engine 10 further includes the electronic control unit 90.

The electronic control unit 90 includes a CPU 91, a ROM 92 storing in advance programs, tables (maps) and constant numbers used in the operation of the CPU 91, a RAM 93 in which the CPU 91 temporarily stores data as necessary, a back-up RAM 94 storing data when the power is on and keeping the stored data even while the power is off, and an interface 95 including an AD converter. The CPU 91, the ROM 92, the RAM 93, the back-up RAM 94 and the interface 95 are connected each other via buses.

The interface 95 is connected to the above sensors and transmits signals from the sensors to the CPU 91. Furthermore, the interface 95 is connected to various members such as the injector 22, the variable nozzle mechanism 53, the EGR control valve 63 and a plurality of the actuators, and sends instruction signals thereto depending on the instructions from the CPU 91.

### <Overview of Operation of Device>

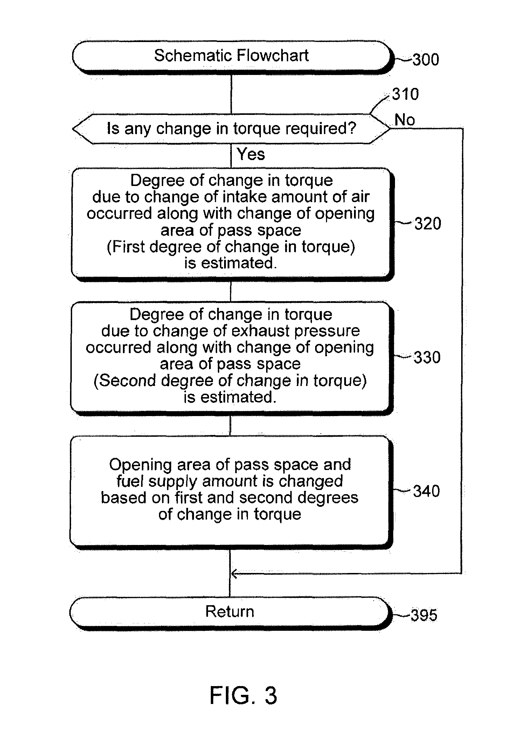

The following is the overview of an operation of the first device applied to the engine 10 referring to FIG. 3. FIG. 3 is a "schematic flowchart" illustrating the overview of an operation of the first device.

The first device changes "the area of the opening of the passage space" and "fuel supply amount" based on the degree of change in torque due to the change in the intake air amount and exhaust pressure occurred along with the change in the area of the opening of the passage space (first degree of change in torque and second degree of change in torque) when the torque of the engine 10 is changed (for example, when a certain amount of change is instructed by the operator instructs the engine 10).

In particular, at step 310 in FIG. 3, the first device determines whether or not any change in torque is required. When the first device determines that some change in torque is required, the first device determines as "Yes" at step 310 and then proceeds to step 320.

The first device estimates, at step 320, the degree of change in torque due to the change in the intake air amount occurred along with the change in the area of the opening of the passage space (the first degree of change in torque). Next, the first device proceeds to step 330 to estimates the degree of change in torque due to the change in the exhaust pressure occurred along with the change in the area of the opening of the passage space (the second degree of change in torque).

After that, the first device proceeds to step 340 to change the area of the opening of the passage space and the fuel supply amount based on the first degree of change in torque and the second degree of change in torque.

On the other hand, when the first device does not determine that any change in torque is required at step 340, the first device determines as "No" to proceed directly to step 395. In this case, the area of the opening of the passage space and the fuel supply amount are not changed in the routine of FIG. 3.

Various methods may be employed as specific methods for changing the area of the opening of the passage space based on the first degree of change in torque and the second degree of change in torque in consideration of configuration of the engine, required fuel efficiency, and required response speed of torque. One embodiment of an actual operation of the first device will be described below.

The above is the descriptions regarding the first device.

### (Second Embodiment)

The following is an embodiment in which "a target value of the degree of change in the area of the opening of the passage space is determined based on the sum of the first degree of change in torque and the second degree of change in torque, and the target value of the fuel supply amount is determined based on the target value of the area of the opening of the passage space" as one embodiment of the first device.

The control device according to this embodiment (hereinafter referred to as "second device") is applied to an engine that has the same configuration as that of the first device (see FIG. 1, and hereinafter referred to as "engine 10" for convenience).

The second device employs, as the first degree of change in torque, the rate of the amount of torque after changing the area of the opening of the passage space with respect to the amount of torque before changing the area of the opening of the passage space (that is, the change rate of torque: hereinafter referred to as "first change rate of torque Tq1 "). The second device employs, as the second degree of change in torque, the change rate of torque defined in the same manner (hereinafter referred to as "second change rate of torque Tq2").

### <Method for Changing Area of the opening of Passage space>

FIG. 4 illustrates an example of the relationship between the change rate ΔOvn of the area of the opening of the passage space when the area of the opening of the passage space is "decreased" (for example, when an "increase" of torque of the engine 10 is instructed), the first change rate of torque Tq1, the second change rate of torque Tq2, and the sum of the first change rate of torque Tq1 and the second change rate of torque Tq2 (hereinafter referred to as "total change rate of torque Tqsum").

As illustrated in FIG. 4, in this example, the first change rate of torque Tq1 increases with increasing amount of the change rate ΔOvn of the area of the opening of the passage space (actually, with decreasing amount of the area of the opening). On the other hand, the second change rate of torque Tq2 decreases with increasing amount of the change rate ΔOvn of the area of the opening of the passage space (with decreasing amount of the area of the opening). As a result, the total change rate of torque Tqsum has a profile that the value increases up to the maximum value Tqsummax and then decreases (that is, a profile that is convex in the positive direction) when the amount of the change rate ΔOvn of the area of the opening of the passage space increases (the area of the opening decreases).

The second device determines a target value of the degree of change in the area of the opening of the passage space (hereinafter referred to as "target change rate ΔOvntgt of the area of the opening") in consideration of the maximum value Tqsummax and a target value of the change rate of torque of the engine 10 (hereinafter referred to as "target change rate of torque Tqtgt").

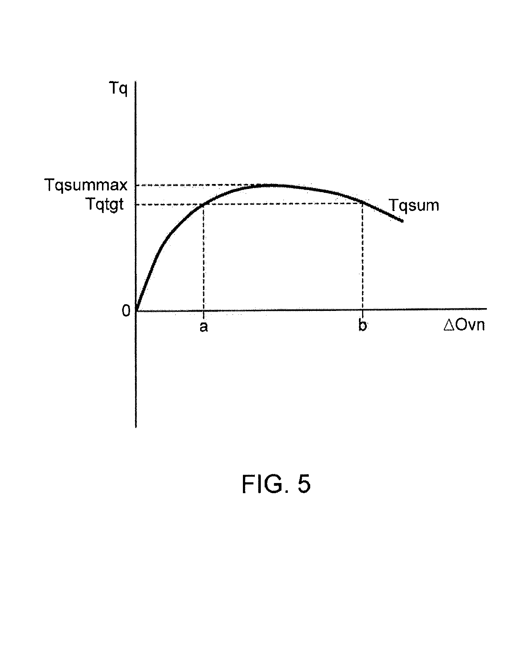

In particular, as illustrated in FIG. 5, in the case that the maximum value Tqsummax of the total change rate of torque Tqsum is equal to or larger than the target change rate of torque Tqtgt, the second device sets, as the target change rate ΔOvntgt of the area of the opening, a change rate ΔOvn of the area of the opening of the passage space within the range in which the total change rate of torque Tqsum is equal to or larger than the target change rate of torque Tqtgt (a change rate ΔOvn within the range from the value a to the value b in FIG. 5).

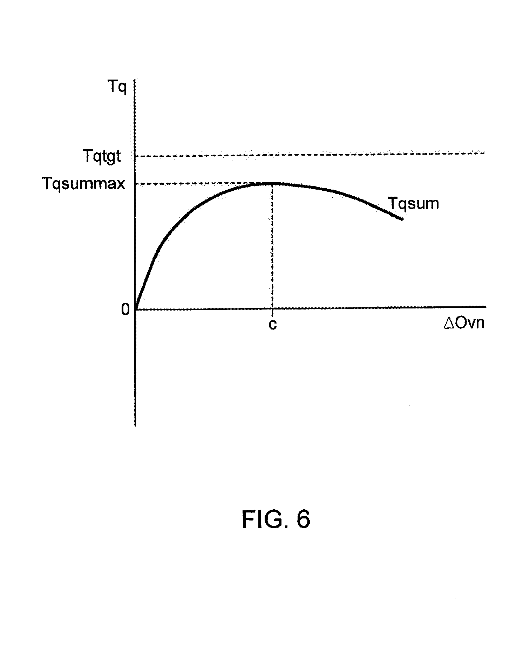

On the other hand, as illustrated in FIG. 6, in the case that the maximum value Tqsummax of the total change rate of torque Tqsum is smaller than the target change rate of torque Tqtgt, the second device sets, as the target change rate ΔOvntgt of the area of the opening, a change rate ΔOvn of the area of the opening of the passage space when the total change rate of torque Tqsum is equal to the maximum value Tqsummax (a change rate ΔOvn corresponding to the value c in FIG. 6).

After that, the second device changes the area of the opening of the passage space so that the change rate ΔOvn of the area of the opening of the passage space matches to the target change rate ΔOvntgt of the area of the opening.

In addition, as is clear from the above, the relationship between the change rate ΔOvn of the area of the opening of the passage space when the area of the opening of the passage space "increases" (for example, "decrease" of torque of the engine 10 is instructed) and the total change rate of torque Tqsum can be illustrated in FIG. 4 so that these relationship is inverted over the vertical axis (the axis of the change rate of torque Tq). Hence, detailed description is omitted regarding the method for changing the area of the opening of the passage space when the area of the opening of the passage space is "increased."

The above is the descriptions regarding the method for changing the area of the opening of the passage space in the second device.

### <Actual Operation>

An actual operation of the second device will be described below.

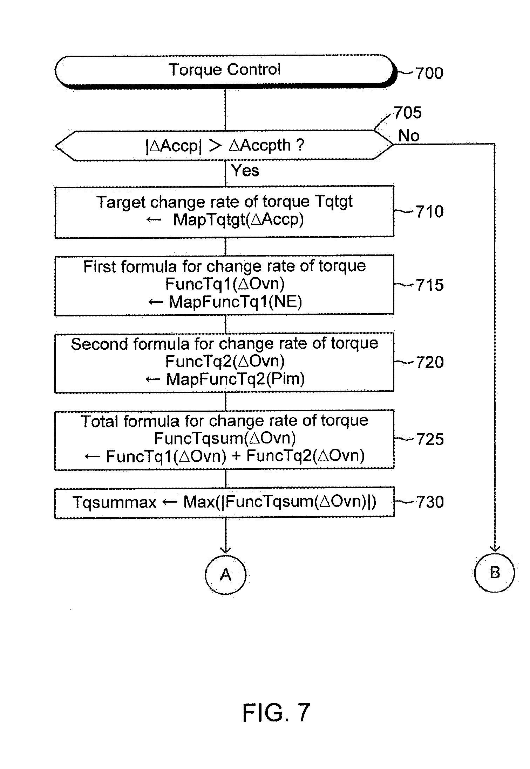

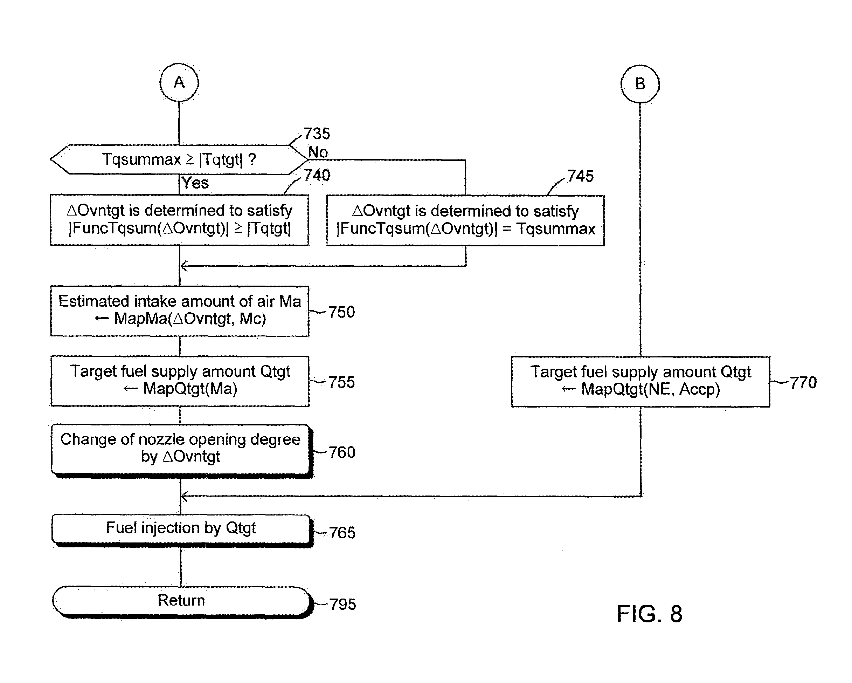

In the second device, the CPU 91 repeatedly executes the "torque control routine", which is indicated by a series of flowcharts in FIG. 7 and FIG. 8, at every predetermined time.

By this routine, the CPU 91 determines, when changing the torque of the engine 10 by a predetermined target value (the target change rate ΔOvntgt of the area of the opening), a target value of the change rate of the area of the opening of the passage space (target change rate ΔOvntgt of the area of the opening) and a target value of the fuel supply amount (target fuel supply amount Qtgt). After that, the CPU91 changes the area of the opening of the passage space by the target change rate ΔOvntgt of the area of the opening and supplies fuel of the target fuel supply amount Qtgt into the combustion chamber.

In particular, the CPU 91 starts a process at step 700 in FIG. 7 and then proceeds to step 705 at a predetermined time. The CPU 91 determines, at step 705, whether or not the absolute value of the change amount (change rate) ΔAccp of the acceleration pedal position Accp per unit time is larger than a predetermined threshold value ΔAccpth. The threshold value ΔAccpth is set to be an appropriate value so that it is determined that the change in torque is instructed by the operator of the engine 10.

When the absolute value of the change rate ΔAccp of the acceleration pedal position is larger than the threshold value ΔAccpth, the CPU91 determines as "Yes" at step 705 to proceeds to step 710.

The CPU91 obtains, at step 710, the target change rate of torque Tqtgt by applying a change rate ΔAccp of the acceleration pedal position at this moment to a table MapTqtgt(ΔAccp) for defining the target change rate of torque, which table defines "the relationship between the change rate ΔAccp of the acceleration pedal position and the target change rate of torque Tqtgt" in advance.

Regarding this table MapTqtgt(ΔAccp) for defining the target change rate of torque, the target change rate of torque Tqtgt is determined to increase with increasing amount of the change rate ΔAccp of the acceleration pedal position.

Next, the CPU91 determines, at step 715 and step 720, a formula to estimate the first change rate of torque Tq1 (the first formula FuncTq1 (ΔOvn) for the change rate of torque) when the area of the opening of the passage space is changed by the change rate ΔOvn, and a formula to estimate the second change rate of torque Tq2 (the second formula FuncTq2(ΔOvn) for the change rate of torque) when the area of the opening of the passage space is changed by the change rate ΔOvn.

In particular, the CPU 91 determines, at step 715, the first formula FuncTq1 (ΔOvn) for the change rate of torque by applying a engine rotational speed NE at this moment to a table MapFuncTq1 (NE) for defining the first formula for the change rate of torque, which table defines "the relationship between the engine rotation speed NE and the first formula FuncTq1 (ΔOvn) for the change rate of torque." Furthermore, the first change rate of torque Tq1 is estimated by applying the change rate ΔOvn of the area of the opening of the passage space to the first formula FuncTq1 (ΔOvn) for the change rate of torque.

Next, the CPU91 proceeds to step 720. The CPU 91 determines, at step 720, the second formula FuncTq2(ΔOvn) for the change rate of torque by applying a supercharging pressure Pim at this moment to a table MapFuncTq2(Pim) for defining the second formula for the change rate of torque, which table defines "the relationship between the supercharging pressure Pim and the second formula FuncTq2(ΔOvn) for the change rate of torque." Furthermore, the second change rate of torque Tq2 is estimated by applying the change rate ΔOvn of the area of the opening of the passage space to the second formula FuncTq2(ΔOvn) for the change rate of torque.

Next, the CPU91 proceeds to step 725. The CPU91 determines, at step 725, a total formula FuncTqsum(ΔOvn) for the change rate of torque by adding the first formula FuncTq1 (ΔOvn) for the change rate of torque and the second formula FuncTq2(ΔOvn) for the change rate of torque.

The total formula FuncTqsum(ΔOvn) for the change rate of torque, which is determined as above, is the formula to estimate the total change rate of torque Tqsum when the area of the opening of the passage space is changed by the change rate ΔOvn (see FIG. 4). That is, the total change rate of torque Tqsum along with the change in the area of the opening of the passage space is estimated by using the total formula FuncTqsum(ΔOvn) for the change rate of torque.

Next, the CPU 91 proceeds to step 730. At step 730, the CPU91 obtains the maximum value Tqsummax of the absolute value of the total formula FuncTqsum(ΔOvn) for the change rate of torque (in other words, the maximum value of the absolute value of the total change rate of torque).

Next, the CPU91 proceeds to step 735 in FIG. 5 through the connection mark A. The CPU91 determines, at step 735, whether or not the maximum value Tqsummax of the absolute value of the total formula for the change rate of torque (hereinafter simply referred to as "maximum value Tqsummax") is equal to or larger than the absolute value of the target change rate of torque Tqtgt.

When the maximum value Tqsummax is equal to or larger than the absolute value of the target change rate of torque Tqtgt, the CPU91 determines as "Yes" at step 735 to proceeds to step 740. At step 740, the CPU91 determines the target change rate ΔOvntgt of the area of the opening.

At step 740, the target change rate ΔOvntgt of the area of the opening is determined so that the absolute value of the total change rate of torque Tqsum (that is, FuncTqsum(ΔOvn)) is equal to or larger than the absolute value of the target change rate of torque Tqtgt.

On the other hand, when the maximum value Tqsummax is smaller than the absolute value of the target change rate of torque Tqtgt, the CPU91 determines as "No" at step 735 to proceeds to step 745. At step 745, the CPU91 determines the target change rate ΔOvntgt of the area of the opening.

At step 745, the target change rate ΔOvntgt of the area of the opening is determined so that the absolute value of the total change rate of torque Tqsum (that is, FuncTqsum(ΔOvn)) is equal to the maximum value Tqsummax.

Next, the CPU91 proceeds to step 750. The CPU 91 determines an estimated intake air amount Ma at step 750 by applying the target change rate ΔOvntgt of the area of the opening and the intake air amount Mc at this moment to a table MapMa(ΔOvntgt, Mc) for defining the estimated intake air amount, which table defines "the relationship between the target change rate ΔOvntgt of the area of the opening, the intake air amount Mc, and the estimated intake air amount" in advance.

The estimated intake air amount Ma is the value estimated as an intake air amount when the area of the opening of the passage space is changed by the target change rate ΔOvntgt of the area of the opening.

Next, the CPU91 proceeds to step 755. The CPU 91 determines a target fuel supply amount Qtgt at step 755 by applying the estimated intake air amount Ma to a table MapQtgt(Ma) for defining the target fuel supply amount, which table defines "the relationship between the estimated intake air amount Ma and the target fuel supply amount Qtgt" in advance.

The target fuel supply amount Qtgt is determined depending on the estimated intake air amount Ma so as to be an appropriate value in view of enhancing the fuel efficiency.

Next, the CPU91 proceeds to step 760. At step 760, the CPU91 sends the instruction to the variable nozzle mechanism 53 to change the area of the opening of the passage space by the target change rate ΔOvntgt of the area of the opening.

Next, the CPU91 proceeds to step 765. At step 765, the CPU91 sends the instruction to the injector 22 to inject fuel by the target fuel supply amount Qtgt. After that, the CPU91 proceeds to step 795 to end this routine once.

On the other hand, at step 705 in FIG. 7, when the absolute value of the change rate ΔAccp of the acceleration pedal position is equal to or smaller than the threshold value ΔAccpth, the CPU91 determines as "No" at step 705 to proceeds to step 770 in FIG. 8 through the connection mark B.

The CPU 91 determines a target fuel supply amount Qtgt at step 770 by applying the engine rotational speed NE and the acceleration pedal position Accp at this moment to a table MapQtgt(NE, Accp) for defining the target fuel supply amount, which table defines "the relationship between the engine rotational speed NE, the acceleration pedal position Accp and the target fuel supply amount Qtgt" in advance.

As is clear from the above, the target fuel supply amount Qtgt determined at step 770 is a target value of the fuel supply amount in the case that the torque of the engine 10 is not changed (in a steady operation state). The target fuel supply amount Qtgt is determined by the table MapQtgt(NE, Accp) for defining the target fuel supply amount to be an appropriate value in consideration of output and fuel efficiency of the engine 10.

Next, the CPU91 sends the instruction to the injector 22 to inject fuel by the target fuel supply amount Qtgt. After that, the CPU91 proceeds to step 795 to end this routine once.

As described above, the second device estimates the relationship between the sum of the first change rate of torque Tq1 and the second change rate of torque Tq2 (the total change rate of torque Tqsum) and the change rate ΔOvn of the area of the opening of the passage space, and determines the target change rate ΔOvntgt of the area of the opening and the target fuel supply amount Qtgt so that the total change rate of torque Tqsum is equal to or larger than the target change rate of torque Tqtgt or so that the total change rate of torque Tqsum is a value close to the target change rate of torque Tqtgt as far as possible, when changing torque of the engine 10. After that, the CPU91 changes the area of the opening of the passage space by the target change rate ΔOvntgt of the area of the opening, and change the fuel supply amount so as to match the target fuel supply amount Qtgt. Thereby, the second device is able to enhance fuel efficiency of the engine 10 as far as possible and to control torque of the engine 10 as well.

The above is the descriptions regarding the second device.

### <General Overview of Embodiments>

As described referring to FIG. 1 to FIG. 8, the control device according to the embodiments of the present invention (the first device and the second device) are applied to an internal combustion engine 10 comprising a supercharger 50. The area of an opening of a passage space, which is a space to pass through exhaust gas guided to the supercharger, is variable (see the area of the opening S1, S2 in FIG. 2).

The control devices of the embodiments comprise a configuration to change the area of the opening of the passage space and a fuel supply amount based on a first degree of change in torque Tq1 and a second degree of change in torque Tq2 (see the routine in FIG. 3, in which the area of the opening of the passage space is changed by the target degree of change in the area of the opening ΔOvntgt and the fuel supply amount is changed to match the target fuel supply amount Qtgt). Here, the fuel supply amount is an amount of fuel to be supplied into a combustion chamber, the first degree is a degree of change in torque of the engine 10 due to a change in an intake air amount Ma to be occurred along with the change in the area of the opening of the passage space, the second degree is a degree of change in torque of the engine 10 due to a change in pressure of the exhaust gas Pim to be occurred along with the change in the area of the opening of the passage space, and the intake air amount is an amount of air guided to the combustion chamber of the engine 10.

In particular, the control devices of the embodiments estimate, when a target value of the degree of change in torque of the engine 10 is referred to as a target degree of change in torque (the target change rate of torque Tqtgt), a relationship FuncTqsum(ΔOvn) between a total degree of change in torque Tqsum and a degree of change in the area of the opening of the passage space ΔOvn. Here, the total degree Tqsum is a sum of the first degree Tq1 and the second degree Tq2.

Next, the control devices of the embodiments determine (at step 740), as a target degree of change in the area of the opening ΔOvntgt, a degree of change in the area of the opening of the passage space within a range to allow an absolute value of the total degree of change in torque Tqsum to be equal to or larger than an absolute value of the target degree of change in torque Tqtgt, when a maximum value Tqsummax of the absolute value of the total degree of change in torque Tqsum is equal to or larger than the absolute value of the target degree of change in torque Tqtgt (when determining as "Yes" at step 735). Here, the target degree of change in the area of the opening ΔOvntgt is a target value of the degree of change in the area of the opening of the passage space.

Or, the control devices of the embodiments determine (at step 745), as a target degree of change in the area of the opening ΔOvntgt, a degree of change in the area of the opening of the passage space at a point to allow the absolute value of the total degree of change in torque Tqsum to be equal to the maximum value Tqsummax, when the maximum value Tqsummax of the absolute value of the total degree Tqsum is smaller than the absolute value of the target degree of change in torque Tqtgt (when determining as "No" at step 735).

Next, the control devices of the embodiments estimate the intake air amount Ma when the area of the opening of the passage space is changed by the target degree of change in the area of the opening ΔOvntgt (at step 750), and determine a target fuel supply amount Qtgt depending on the estimated intake air amount Ma (at step 755). Here, the target fuel supply amount Qtgt is a target value of the fuel supply amount.

After that, the control devices of the embodiments change the area of the opening of the passage space and the fuel supply amount (at step 760 and step 765) so as to match the degree of change in the area of the opening of the passage space with the target degree of change in the area of the opening ΔOvntgt and so as to match the fuel supply amount with the target fuel supply amount Qtgt.

In addition, the supercharger of the engine 10 to which the control devices of the embodiments are employed comprise a turbine 52 installed on an exhaust passage 42 of the engine 10 and to be driven by using exhaust gas guided to the turbine through the passage space, a compressor 51 installed on an intake passage 32 of the engine 10 and to be driven to compress air guided to the combustion chamber when the turbine 52 is driven, and a member 53 to change the area of the opening of the passage space.

### <Other Embodiments>

The present invention is described in detail referring to specific embodiments, but the present invention is not limited within the above specific embodiments, various modifications corrections may be made without departing from the scope of the invention.

For example, the second device employs the "change rate" as the degree of change in torque. The control device of the present invention, however, an "amount of change" may be employed as the degree of change in torque.

Furthermore, the second device determines (at step 740) a target degree of change in the area of the opening ΔOvntgt so that the absolute value of the total degree of change in torque Tqsum is equal to or larger than the absolute value of the target degree of change in torque Tqtgt, when the maximum value Tqsummax of the absolute value of the total degree of change in torque Tqsum is equal to or larger than the absolute value of the target degree of change in torque Tqtgt (when determining as "Yes" at step 735). In this case, the target change rate ΔOvntgt of the opening area may be determined in consideration of other purposes (for example, a purpose to decrease the amount of constituents such as NOx included in exhaust gas as far as possible) as far as satisfying the condition that "the absolute value of the total change rate of torque Tqsum is equal to or larger than the absolute value of the target change rate of torque Tqtgt". Furthermore, a feedback control may be employed so as to match the area of the opening of the passage space with the target degree of change in the area of the opening ΔOvntgt.

Additionally, for example, one embodiment of a plurality of the embodiments described above (the first embodiment, the second embodiment, and other embodiments) may be employed to other embodiment(s) thereof. In other words, one embodiment of a plurality of the embodiments described above may be combined with one or more embodiment(s) thereof.

## Claims

1. A control device applied to an internal combustion engine,
the internal combustion engine comprising a supercharger and a mechanism to allow area of an opening of a passage space to be variable, the passage space being a space to pass through exhaust gas guided to the supercharger,
the control device comprising a configuration to change the area of the opening of the passage space and a fuel supply amount based on a first degree of change in torque and a second degree of change in torque, the fuel supply amount being an amount of fuel to be supplied into a combustion chamber, the first degree being a degree of change in torque of the engine due to a change in an intake air amount to be occurred along with the change in the area of the opening of the passage space, the second degree being a degree of change in torque of the engine due to a change in pressure of the exhaust gas to be occurred along with the change in the area of the opening of the passage space, the intake air amount being an amount of air guided to the combustion chamber of the engine.

2. The control device according to claim 1,
further comprising a configuration, upon a target value of the degree of change in torque of the engine being referred to as a target degree of change in torque:
to estimate a relationship between a total degree of change in torque and a degree of change in the area of the opening of the passage space, the total degree being a sum of the first degree and the second degree;
to determine, as a target degree of change in the area of the opening, a degree of change in the area of the opening of the passage space within a range to allow an absolute value of the total degree of change in torque to be equal to or larger than an absolute value of the target degree of change in torque, upon a maximum value of the absolute value of the total degree of change in torque being equal to or larger than the absolute value of the target degree of change in torque, or to determine, as the target degree of change in the area of the opening, a degree of change in the area of the opening of the passage space at a point to allow the absolute value of the total degree of change in torque to be equal to the maximum value, upon the maximum value of the absolute value of the total degree being smaller than the absolute value of the target degree of change in torque, the target degree of change in the area of the opening being a target value of the degree of change in the area of the opening of the passage space;
to estimate the intake air amount upon the area of the opening of the passage space being changed by the target degree of change in the area of the opening, and to determine a target fuel supply amount depending on the estimated intake air amount, the target fuel supply amount being a target value of the fuel supply amount; and
to change the area of the opening of the passage space and the fuel supply amount so as to match the degree of change in the area of the opening of the passage space with the target degree of change in the area of the opening and so as to match the fuel supply amount with the target fuel supply amount.

3. The control device according to claim 1 or claim 2,
the supercharger comprising a turbine installed on an exhaust passage of the engine and to be driven by using exhaust gas guided to the turbine through the passage space, a compressor installed on an intake passage of the engine and to be driven to compress air guided to the combustion chamber upon the turbine being driven, and a member to change the area of the opening of the passage space.
